# EUROPÄISCHE PATENTANMELDUNG

(11) **EP 0 624 541 A2**
(43) Veröffentlichungstag der Anmeldung: **17.11.1994**
(21) Anmeldenummer: 94107309.0
(22) Anmeldetag: 10.05.1994
(51) Int. Cl.: B66B 13/14, E05F 15/14

(54) **Türsteuereinheit**

(30) Priorität: 14.05.1993 DE 9307326 U
(71) Anmelder: SIEMENS AKTIENGESELLSCHAFT, D-80333 München (DE)
(72) Erfinder: Ludwig, Heinz, Dipl.-Ing., D-30823 Garbsen (DE); Sonntag, Guido, Dipl.-Ing., D-30989 Gehrden (DE)

(57) **Zusammenfassung**

Türsteuereinheit, insbesondere für Aufzugstüren und/oder andere Schiebetüren, die einen hohen Sicherheitsstandard genügt und den Bedienkomfort durch einen erhöhten automatisierungsgrad verbessert. Die Türsteuereinheit umfaßt einen programmierbaren Mikrocontroller (1) an den Sensorelemente (2), übergeordnete programmierbare Steuereinheiten (9) und Bedieneinheiten (4) anschließbar sind. Der Mikrocontroller (1) steht mit dem Antriebsmotor (6) der Tür (22) bzw der Türen in Wirkverbindung und weist ein Schaltvorrichtung (5) bei Auswahl wenigstens zweier Betriebsarten auf.

## Beschreibung

Die Erfindung betrifft eine Türsteuereinheit, insbesondere für Aufzugstüren und/oder Schiebetüren.

Bei motorisch betriebenen Schiebetüren und zwar sowohl bei einfachen Schiebetüren als auch bei anderen Aufzugstüren steigen durch die allgemeine bautechnische Entwicklung auf der einen Seite die Anforderungen an den Bedienkomfort, die Sicherheit und die Schnelligkeit während gleichzeitig auf der anderen Seite die Vielfalt der anzutreibenden Türen insbesondere bezüglich Gewicht und Größe zunimmt.

Es ist Aufgabe der Erfindung, eine Türsteuereinheit hohen Automatisierungsgrades und Sicherheitsstandards anzugeben, die für eine Vielzahl verschiedener Typen einsetzbar ist. Dabei soll die Anpassung an verschiedene Türtypen selbsttätig erfolgen. Die Türsteuereinheit soll möglichst einfach zu kalibrieren sein und mittels entsprechender Diagnoseeinrichtungen leicht zu warten und zu reparieren sein.

Die Aufgabe der Erfindung wird durch eine Türsteuereinheit nach Anspruch 1 gelöst. Dadurch, daß die Türsteuereinheit einen Mikrocontroller aufweist, können viele Aufgaben und Funktionen, die bisher von einer übergeordneten Aufzugssteuerung auf dem Signalweg übermittelt wurden, von der Türsteuerung selbst übernommen werden. Hierdurch wird die übergeordnete Aufzugssteuerung entlastet und der Verdrahtungsaufwand für von der übergeordneten Aufzugssteuerung zur Türsteuereinheiten führende Signalwege deutlich reduziert.

Nach Anspruch 2 kann die Türsteuereinheit in zwei Betriebsarten betrieben werden. In der einen Betriebsart "Automatikbetrieb" muß nur ein Signalweg für die Übermittlung des "Tür-AUF-Signals" von der übergeordneten Aufzugssteuerung zur Türsteuereinheit bestehen. Alle anderen Funktionen werden von der Türsteuereinheit automatisch bearbeitet. In der anderen Betriebsart "AUF-ZU-Betrieb" erfolgt die Steuerung der Türbewegung nach Maßgabe der von der übergeordneten Aufzugssteuerung und/oder einer Bedieneinheit übermittelten Steuersignale. Der Mikrocontroller wählt einer vorgebbaren Prioritätsrangfolge entsprechend die an den Antriebsmotor zu übermittelnden Signale aus. Hierbei steht immer während einer etwaigen Aufzugfahrt das Signal "Tür ZU" automatisch an. Werden im Stillstand die Signale "Tür AUF" und "Tür ZU" gleichzeitig übermittelt, so genießt das Signal "Tür AUF" unbedingten Vorrang. Damit ist eine erhöhte Sicherheit beim Betrieb der Türsteuereinheit gegeben.

Nach Anspruch 3 kann in beiden Betriebsarten ein sogenannter "Folgebetrieb" realisiert werden. Dadurch, daß an die Schaltvorrichtung eine Lichtschranke oder eine Sensorleiste angeschlossen ist, erfolgt eine selbsttätige Überwachung des Schließbereiches der Tür.

Dadurch, daß wenigstens eine speicherprogrammierbare Steuerung (SPS) unmittelbar an den Mikrocontroller angeschlossen ist, lassen sich zahlreiche weitere Funktionen realisieren. So können durch die speicherprogrammierbaren Steuerungen Beschleuniguns- und Verzögerungskurven für die Türbewegung vorgegeben werden. Es können gewissen Mindestöffnungszeiten der Türen eingestellt werden. In der SPS kann auch ein differenziertes Reagieren auf Meßsignale, insbesondere von der Lichtschranke oder der Sensorleiste, eingespeichert sein. So kann ein Ansprechen der Lichtschranke oder der Sensorleiste zunächst zu einer Verlangsamung der Türbewegung führen, dann zu einem Stoppender Türbewegung und schließlich zu einer Umkehrung der Türbewegungsrichtung. Ein in der SPS gespeichertes Programm kann die gesamten sonst einer übergeordneten Aufzugssteuerung obliegenden Aufgaben übernehmen.

Durch ein Bedienelement nach Anspruch 5 kann die Türsteuereinheit auf den jeweils vorliegenden Anwendungsfall abgestimmt werden und die gesamte Türsteuereinheit in einfacher Weise justiert werden. Der Mikrocontroller unterstützt diese Voreinstellung durch eine automatische Parameterermittlung. So wird die Türweite ermittelt, in dem nach Betätigung einer entsprechenden Taste eine einmalige Öffnungs- und Schließbewegung der Tür in Schleichfahrt automatisch durchgeführt wird und die jeweiligen Haltepunkte von dem Mikrocontroller selbsttätig abgespeichert werden. Hierdurch ist die Türweite automatisch bestimmt. Gemäß einer weiteren Funktion, die über das Bedienelement auslösbar ist, führt die Tür kontrollierte Schließ- und Öffnungsbewegungen durch. So können bei der Justierung die Fahreigenschaften der Tür im Automatikbetrieb beurteilt und ggf. optimiert werden. Dies ist durch die Verstellung der am Bedienelement befindlichen Potentiometer möglich. Diese veränderten Potentiometereinstellungen werden dann von dem Mikrocontroller abgespeichert.

Gemäß Anspruch 6 weist die Türsteuereinheit eine Überwachungseinrichtung für die kinetische Energie der bewegten Tur auf. Hierdurch wird die kinetische Energie der Tür innerhalb der zulässigen Grenzen gehalten ohne das eine weitere Justierung erforderlich. Diese Überwachung ist insbesondere bei besonders großen und schweren Türen sowie bei besonders schnellen Türbewegungen erforderlich. Um hierzu die notwendigen Angaben für den Mikrocontroller zu erhalten, weist die Überwachungseinrichtung ein Motorstromerfassungsglied, insbesondere mit einem angeschlossenen Analog-Digital-Wandler auf. Das Motorstromerfassungsglied ist in der Leitung von einem Netzteil zum Motor angeordnet und gibt dem Mikrocontroller den jeweiligen Motorstrom in digitaler Form an. Der Mikrocontroller wirkt dann auf einen ebenfalls mit dem Mikrocontroller verbundenen Motorstrombegrenzer, insbesondere in Form einer steuerbaren Endstufe, der ebenfalls in der Leitung vom Netzteil zum Motor angeordnet ist. Über die Endstufe wirkt der Mikrocontroller derart auf den Motorstrom, daß die kinetische Energie der vom Antriebsmotor angetriebenen Tur erfindungsgemäß begrenzt wird. Fur die Übermittlung der Daten, die dem Mikrocontroller für seine Rechnungen zur Verfügung gestellt werden, sind das Motorstromerfassungsglied und das Netzteil über elektrische Verbindungen mit dem Mikrocontroller verbunden.

Nach Anspruch 7 weist die Türsteuereinheit eine zusätzliche Drehzahlerfassungseinrichtung auf. Dadurch, daß ein rotierendes Teil des Antriebsmotors mit einer optisch ablesbaren Markierung versehen ist, wobei ein Sensormodul diese optischen Signale in elektrische umsetzt und an den Mikrocontroller übermittelt, kann anhand der Impulsbreite dieser Signale, die Drehzahl des Antriebsmotors bestimmt werden. Dadurch, daß ein weiterer fest vorgegebene Impulse abgebender Impulsgeber an den Mikrocontroller angeschlossen ist und der Mikrocontroller ein Vergleichselement für die von dem Sensorelement und dem Impulsgeber übermittelten Signale aufweist, kann zusätzlich die Drehrichtung des Motors ermittelt werden. Je nach Drehrichtung des Antriebsmotors ergibt sich ein Voreilen oder ein Nacheilen der von dem Sensorelement ermittelten Signale gegenüber den von dem Impulsgeber fest vorgegebenen Signalen.

Gemäß Anspruch 8 kann zwischen beiden Drehzahlerfassungseinrichtungen ausgewählt werden. Die Umschalteinheit schaltet immer dann von der ersten Drehzahlerfassungseinrichtung auf die zusätzliche Drehzahlerfassungseinrichtung um, wenn die erste Drehzahlerfassungseinrichtung aufgrund einer zu langsamen Drehzahl keine exakte Aussage über die tatsächliche Drehzahl des Antriebsmotor zuläßt.

Dadurch, daß der Mikrocontroller eine zum Anschluß eines Bussystems geeignete serielle Schnittstelle aufweist, kann die gesamte Türsteuerung in eine zentrale Gebäudeüberwachungseinheit integriert werden. Es können komfortable Diagnosegeräte und Bedienelemente angeschlossen werden. So kann beispielsweise eine visualisierte Datenaus- und -eingabe erfolgen.

Gemäß Anspruch 10 erkennt die Türsteuereinheit selbsttätig welcher Antriebsmotor an die Türsteuereinheit angeschlossen ist. Hierdurch werden mögliche Montagefehler ausgeschlossen und eine einfachere Montage ermöglicht.

Gemäß Anspruch 11 weist die Türsteuereinheit neben den üblichen Funktionen "Öffnen" und "Schließen" der Tür eine dritte Funktion "Drängeln" auf, die eine wechselnde Öffnung- und Schließbewegung der Türen bewirkt. Hierdurch wird ein beschleunigtes Passieren des Türenbereiches bewirkt. Dadurch, daß in einer vierten Funktion, das von einer anzuschließenden SPS vorgegebene Türsteuerprogramm abrufbar ist, können umfangreiche weitere Funktionen zur Türbewegung verwirklicht werden.

Nach Anspruch 12 können die Lichtschranke oder die Sensorleiste und/oder eine SPS potentialfrei an den Mikrocontroller angeschlossen werden. Hierdurch wird eine mögliche Beschädigung oder Zerstörung des Mikrocontrollers durch etwaige auftretende Spannungsspitzen verhindert.

Dadurch, daß an den Mikrocontroller ein Leuchtdioden aufweisendes Fehlerdiagnoseport angeschlossen ist, wird die Servicefreundlichkeit der Türsteuereinheit erhöht.

Dadurch, daß der Mikrocontroller mit einem ein Leistungsschaltelement, insbesondere einen Mosfet-Transistor, aufweisenden Netzteil verbunden ist, wobei an dieses Netzteil der Antriebsmotor angeschlossen ist, ist eine getaktete Stromversorgung des Antriebsmotors realisiert. Ein solches Netzteil bietet gegenüber einen herkömmlichen Transformator-Lösung eine beträchtliche Raumbedarfs- und Gewichtsersparnis. Hierdurch kann die Türsteuereinheit auch bei beengten Platzverhältnissen eingesetzt werden.

Gemäß Anspruch 16 wird die Türsteuereinheit vorteilhaft in Verbindung mit einem Gleichstrommotor betrieben, der insbesondere im Anfahrbereich ein hohes Anzugsmoment für die Türbewegung bereitstellt.

Die Erfindung wird anhand eines Ausführungsbeispiels näher erläutert. Es zeigen:
- FIG 1: ein Blockschaltbild der Türsteuerungseinheit und
- FIG 2: eine schematisch dargestellte Draufsicht auf die Türsteuerungseinheit.

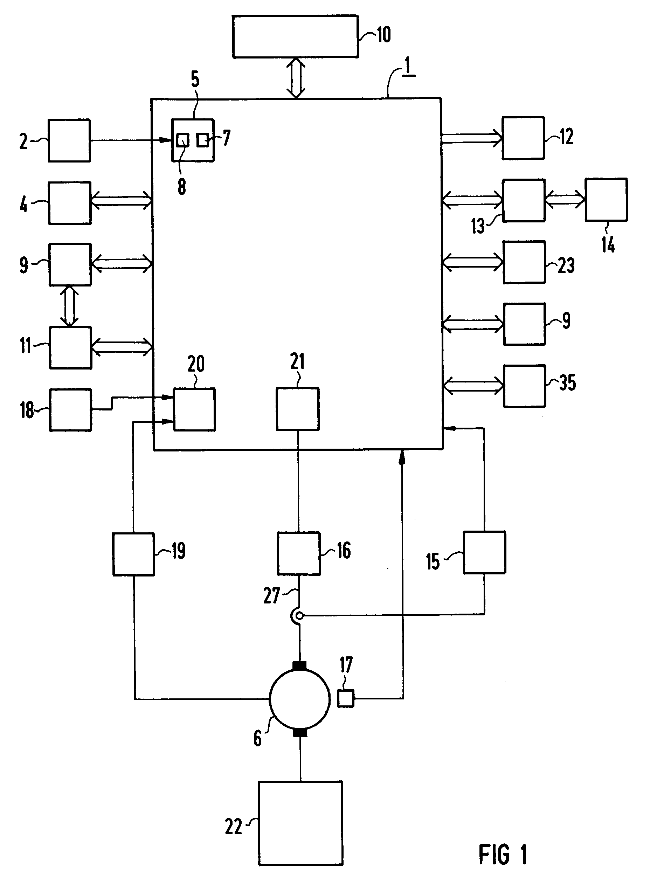

Der in FIG 1 dargestellte Mikrocontroller 1 ist über einen Motorstrombegrenzer 16 mit einem Antriebsmotor 6 verbunden. Der Antriebsmotor 6 wirkt auf eine Tür 22. An den Motorstrombegrenzer 16 ist ein Motorerkennungselement 21 angeschlossen. An die Motorstromzuleitung 27 ist ein Motorstromerfassungsglied 15 angeschlossen, das mit dem Mikrocontroller 1 in Verbindung steht.

Dem Antriebsmotor 6 ist eine erste Drehzahlerfassungseinrichtung 17 zugeordnet, die der Drehzahl entsprechende Signale an den Mikrocontroller 1 übermittelt. Der Antriebsmotor 6 ist darüber hinaus mit einer zusätzlichen Drehzahlerfassungseinrichtung 19 verbunden. Diese zusätzliche Drehzahlerfassungseinrichtung 19 ist zusammen mit einem Impulsgeber 18 an ein Vergleichselement 20 des Mikrocontroller 1 angeschlossen.

Der Mikrocontroller 1 weist eine Schaltvorrichtung 5 auf, die einen Auswahlschalter 7 sowie einen weiteren Schalter 8 umfaßt, wobei an diesen weiteren Schalter 8 als Sensorelement 2 eine Lichtschranke oder eine Sensorleiste angeschlossen ist.

Im weiteren steht der Mikrocontroller 1 mit einer Bedieneinheit 4 und einem Funktionsgeber 11 in Wirkverbindung. An dem Mikrocontroller 1 ist ein EEProm 10 als beschreibbares Speicherelement angeschlossen. Ein Datenausgang des Mikrocontroller 1 ist mit einem Fehlerdiagnoseport 12 verbunden. Über eine serielle Schnittstelle 13 kann ein Bussystem 14 an den Mikrocontroller 1 angeschlossen werden. Damit ist die Türsteuereinheit voll busfähig. Sie kann zentral überwacht werden. Es können Diagnosegerate und/oder visuelle Datenausgabe- und -eingabegeräte angeschlossen werden. Zusätzlich steht der Mikrocontroller 1 mit einer Schnittstelle 23 für Hardware in Wirkverbindung.

Die nähere Funktion dieser Türsteuereinheit wird wie folgt erläutert: Über den Auswahlschalter 7 wird eine der beiden Betriebsarten des Mikrocontrollers 1 ausgewählt. Wird über den Auswahlschalter 7 die Betriebsart "Automatik-Betrieb" ausgewählt, so übermittelt eine übergeordnete Aufzugssteuerung 35 nur das Tür-AUF-Signal an die Türsteuereinheit. Alle weiteren Funktionen zur Steuerung der Türbewegung werden von der Türsteuereinheit automatisch durchgeführt. Wird von dem Auswahlschalter 7 die Antriebsart "AUF-ZU-Betrieb" ausgewählt, so wirkt auf den Mikrocontroller 1 sowohl die Bedieneinheit 4 als auch die übergeordnete Aufzugssteuerung 35. Die Abarbeitung der Signale durch den Mikrocontroller 1 erfolgt gemäß einer vorgegebenen im Mikrocontroller 1 abgespeicherten Rangfolge. Durch einen weiteren Schalter 8 der Schaltvorrichtung 5 kann in beiden Betriebsarten zusäztlich das Sensorelement 2 zugeschaltet werden. Als Sensorelement 2 werden insbesondere Lichtschranken oder Sensorleisten eingesetzt.

In beiden Betriebsarten kann auf die im Funktionsgeber 4 gespeicherten Funktionen zugegriffen werden. Der Funktionsgeber 4 umfaßt wenigstens vier Funktionen. Eine erste Funktion "AUF", die das Öffnen der Tür bewirkt. Eine zweite Funktion "ZU", die das Schließen der Tür bewirkt und eine dritte Funktion "DRÄNGELN", die eine im Wechsel stattfindene Öffnungs- und Schließbewegung der Türen bewirkt. Entsprechend einer vierten Funktion, die von dem Funktionsgeber 4 vorgegeben werden kann, wird eine speicherprogrammierbare Steuerung 9 direkt auf den Mikrocontroller 1 geschaltet. Bei dieser Funktion gelangt ein in der SPS 9 abgespeichertes Türsteuerprogramm zur Anwendung. Hierdurch können weitere anwenderspezifische Türbewegungsfunktionen realisiert werden.

Damit die Türsteuereinheit im Sinne einer Regelung wirken kann, muß die Geschwindigkeit der Tür an den Mikrocontroller 1 zurückgemeldet werden. Hierfür ist eine erste Drehzahlerfassungseinrichtung 17, beispielsweise ein Tachogenerator, vorgesehen. Da diese erste Drehzahlerfassungseinrichtung 17 einen großen Drehzahlbereich erfassen muß, neigt sie dazu, bei geringen Motordrehzahlen stark fehlerbehaftete Ergebnisse zu liefern. Deshalb ist eine zusätzliche Drehzahlerfassungseinrichtung 19, insbesondere für niedrige Motordrehzahlen vorgesehen. Bei dieser zusätzliche Drehzahlerfassungseinrichtung 19 wird ein der Drehzahl des Antriebsmotors proportionales optisches Signal detektiert und in ein elektrisches umgewandelt. Über einen A/D-Wandler werden diese Signale dem Vergleichselement 20 des Mikrocontroller 1 übermittelt. An einem weiteren Eingang dieses Vergleichselementes 20 stehen die fest vorgegebenen Signale des Impulsgebers 18 an. Der Mikrocontroller 1 kann nun anhand der Pulsweite der von der zusätzlichen Drehzahlerfassungseinrichtung 19 übermittelten Signale, die der Motordrehzahl entsprechen und anhand des von dem Vergleichselement 20 durchgeführten Vergleiches die Drehrichtung bestimmen. Das Vergleichselement 20 ermittelt ein Vor- oder Nacheilen der von der zusätzlichen Drehzahlerfassungseinrichtung 19 übermittelten Signale gegenüber den vom Impulsgeber 18 gelieferten Signalen. Damit steht die Drehrichtung des Antriebsmotors 6 bzw. die Bewegungsrichtung der Tür 22 fest. Die zusätzliche Drehzahlerfassungseinrichtung 19 wird auch zur Weglängenbestimmung eingesetzt.

Der Mikrocontroller 1 kann über den Motorstrombegrenzer 16 als Stellglied den Antriebsmotor 6 regeln. Durch entsprechende nicht in der Zeichnung dargestellte Sensorelemente können weitere Sicherheitsmerkmale, wie eine Kurzschlußstromüberwachung und/oder eine Temperaturüberwachung realisiert werden. Hierzu wird durch das Motorstromerfassungsglied 15 dem Mikrocontroller 1 eine dem Motorstrom proportionale Meßgröße übermittelt.

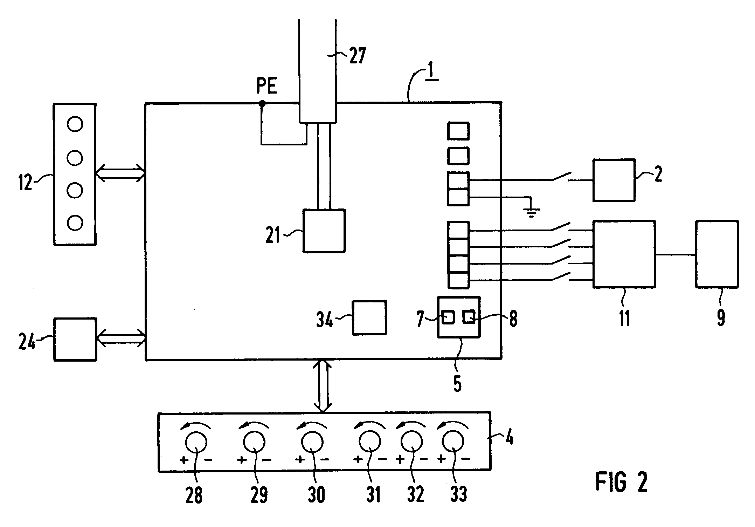

Aus FIG 2 ist insbesondere die Bedieneinheit 4 im Detail erkennbar. Die Bedieneinheit 4 umfaßt mehrere Potentiometer 28-33 zur Einstellung und Justierung der Türsteuerungseinheit. Über ein Türöffnungsgeschwindigkeitspotentiometer 28 und ein Türschließgeschwindigkeitspotentiometer 29 können Maximalgeschwindigkeiten für die Türbewegung vorgegeben werden. Durch ein Schleichgeschwindigkeitspotentiometer 30 kann eine maximale Schleichgeschwindigkeit für die Türbewegung eingestellt werden. Ein Zeitpotentiometer 31 dient der Einstellung der Zeit in der die Tür 22 im Automatikbetrieb offen steht. Ein Soft-Streckenlängenpotentiometer 32 wird verwendet, um die Länge einer jeweils gegen Ende und zu Anfang jeglicher Türbewegung mit Schleichgeschwindigkeit zu durchfahrender Soft-Strecke vorzugeben. Über ein Beschleunigungspotentiometer 33 kann die Steilheit der Beschleunigungs- bzw. Verzögerungsrampen für die Türbewegung eingestellt werden.

Bei dem Fehlerdiagnoseport 12 dienen Leuchtdioden 25 einer Fehleranzeige. Ein Türweitenermittlungsschalter 24 wird zur Justierung der Türsteuereinheit benutzt. Nach Betätigung des Türweitenermittlungsschalter 24 veranlaßt die Türsteuerungseinheit eine kontrollierte Auf- und Zubewegung der Tür 22 mit einer vorgegebenen Schleichgeschwindigkeit. Die sich ergebenden Haltepunkte werden registriert und von den Mikrocontroller 1 beispielsweise in dem EEProm 10 abgelegt. Damit erfolgt die Türweitenermittlung selbsttätig.

Über einen "Tür-AUF" -Schalter 34 kann vom Benutzer eine Öffnungsbewegung der Tür 22 eingeleitet werden.

An die Motorstromleitung 27 ist das Motorerkennungselement 21 angeschlossen. Bei einer ersten Inbetriebnahme erkennt das Motorerkennungselement 21 den jeweils angeschlossenen Antriebsmotor 6 an seinem Innenwiderstand und nimmt eine entsprechende Initialisierung des Mikrocontrollers 1 vor. Eine weitere Betätigung des Motorerkennungselementes 16 ist nicht erforderlich. Über einen Sensorelementanschluß 26 kann als Sensorelement 2 eine Lichtschranke oder eine Sensorleiste angeschlossen werden. An einem Funktionsgeberanschluß 36 ist der Funktionsgeber 11 sowie eine speicherprogrammierbare Steuerung 9 angeschlossen.

Die gezeigte Türsteuereinheit ermöglicht unter Ausnutzung eines Mikrocontroller 1 eine Vielzahl von Funktionen, die bisher entweder gar nicht oder nur von einer übergeordneten Aufzugssteuerung durchgeführt werden konnten. Sie verbindet eine hohe Regelgüte für den Antriebsmotor 6 mit einer Vielzahl von den Bedienkomfort und den Sicherheitsstandard erhöhenden Funktionen für den Benutzer. Gleichzeitig wird die Wartungsarmut und die Servicefreundlichkeit der gesamten Anlage beträchtlich erhöht.

## Patentansprüche

1. Türsteuereinheit, insbesondere für Aufzugstüren und/oder andere Schiebetüren, bei der an einen programmierbaren Mikrocontroller (1) Sensorelemente (2), übergeordnete programmierbare Steuereinheiten (9) und Bedieneinheiten (4) anschließbar sind, wobei der Mikrocontroller (1) mit dem Antriebsmotor (6) der Tür (22) bzw. der Türen in Wirkverbindung steht und wobei wenigstens eine Schaltung mit einer Schaltvorrichtung (5) an den Mikrocontroller (1) angeschlossen ist, wobei die Schaltvorrichtung (5) einen Auswahlschalter (7) zur Auswahl zwischen wenigstens zwei Betriebsarten aufweist.

2. Türsteuereinheit nach Anspruch 1, bei der in einer ersten Stellung des Auswahlschalters (7) für eine Betriebsart "Automatikbetrieb" eine nur ein "Tür-AUF-Signal" abgebende übergeordnete Aufzugssteuerung mit dem Mikrocontroller (1) verbunden ist und in einer zweiten Stellung des Auswahlschalters (7) für eine andere Betriebsart "AUF-ZU-Betrieb" zusätzlich zu der übergeordneten Aufzugssteuerung ein Bedienelement (4) mit dem Mikrocontroller (1) verbunden ist.

3. Türsteuereinheit nach Anspruch 1 und/oder 2, bei der die Schaltvorrichtung einen weiteren Schalter (8) aufweist, an dem eine Lichtschranke oder eine Sensorleiste angeschlossen ist.

4. Türsteuereinheit nach einem oder mehreren der Ansprüche 1 bis 3, bei der wenigstens eine speicherprogrammierbare Steuerung (SPS) (9) unmittelbar an den Mikrocontroller (1) angeschlossen ist.

5. Türsteuereinheit nach einem oder mehreren der vorhergehenden Ansprüche, bei der ein wenigstens ein Potentiometer aufweisendes Bedienelement (4) an den Mikrocontroller (1) angeschlossen ist, wobei eine maximale Geschwindigkeit jeweils für eine Öffnungs- oder eine Schließbewegung und/oder eine Schleichgeschwindigkeit und/oder eine Beschleunigungs- oder Verzögerungsrampe für die Türbewegung sowie eine Aufhaltezeit der Tür (22) und die Länge einer Soft-Startstrecke für einen Öffnungs- und/oder Schließvorgang über entsprechende Potentiometereinstellungen vorgebbar ist.

6. Türsteuereinheit nach einem oder mehreren der vorhergehenden Ansprüche, bei der ein Motorstromerfassungsglied (15) in einer von einem Netzteil zum Antriebsmotor (6) führenden Motorstromzuleitung (27) angeordnet ist und über einen A/D-Wandler mit dem Mikrocontroller (1) verbunden ist und ein zum Verarbeiten der Signale des Motorstromerfassungsgliedes (15) eingerichtetes Prozessorsystem mit dem Mikrocontroller (1) verbunden ist und der Mikrocontroller (1) mit einem Motorstrombegrenzer (16), insbesondere in Form einer steuerbaren Endstufe verbunden ist, wobei der Motorstrombegrenzer (16) als Türgeschwindigkeitssteuerglied wirkend in der Motorstromzuleitung (27) angeordnet ist.

7. Türsteuereinheit nach einem oder mehreren der vorhergehenden Ansprüche, bei der ein der Drehzahl des Antriebsmotors (6) proportionale Impulse abgebende erste Drehzahlerfassungseinrichtung (17) mit dem Mikrocontroller (1) in Signalverbindung steht und als eine zusätzliche Drehzahlerfassungseinrichtung (19) ein rotierendes Teil des Antriebsmotor (6) mit einer optisch ablesbaren Markierung versehen ist, wobei ein Sensorelement diese optischen Signale in elektrische umsetzt und an den Mikrocontroller (1) übermittelt und ein weiterer fest vorgegebener Impuls abgebender Impulsgeber (18) an den Mikrocontroller (1) angeschlossen ist, wobei der Mikrocontroller (1) ein Vergleichselement (20) für diese Signale aufweist.

8. Türsteuereinheit nach Anspruch 7, bei der eine zwischen beiden Drehzahlerfassungseinrichtungen (17,19) auswahlende Umschalteinheit mit dem Mikrocontroller (1) verbunden ist.

9. Türsteuereinheit nach einem oder mehreren der vorhergehenden Ansprüche, bei der der Mikrocontroller (1) mit einer zum Anschluß eines Bussystems (14) geeigneten seriellen Schnittstelle versehen ist.

10. Türsteuereinheit nach einem oder mehreren der vorhergehenden Ansprüche, bei der ein Motorerkennungselement (21) mit dem Mikrocontroller (1) verbunden ist.

11. Türsteuereinheit nach einem oder mehreren der vorhergehenden Ansprüche, bei der ein wenigstens vier Funktionen, wobei eine erste Funktion "Auf" das Öffnen der Tür bewirkt, eine zweite Funktion "ZU" das Schließen der Tür, eine dritte Funktion "DRÄNGELN" eine wechselnde Öffnungs- und Schließbewegung der Türen bewirkt wird und in einer vierten Funktion das von eine anzuschließenden SPS (9) vorgegebene Türsteuerprogramm abrufbar ist, umfassender Funktionsgeber (11) mit dem Mikrocontroller (1) verbunden ist.

12. Türsteuereinheit nach einem oder mehreren der Ansprüche, bei der die Lichtschranke oder die Sensorleiste und/oder die SPS (9) optoelektronisch an den Mikrocontroller (1) angekoppelt sind.

13. Türsteuereinheit nach einem oder mehreren der Ansprüche, bei der ein Leuchtdioden aufweisendes Fehlerdiagnoseport (12) an den Mikrocontroller (1) angeschlossen ist.

14. Türsteuereinheit nach einem oder mehreren der vorhergehenden Ansprüche, bei der der Mikrocontroller (1) mit einem EEProm (10) verbunden ist.

15. Türsteuereinheit nach einem oder mehreren der vorhergehenden Ansprüche, bei der der Mikrocontroller (1) mit einem ein Leistungsschaltelement aufweisendes Netzteil verbunden ist, wobei an dieses Netzteil der Antriebsmotor (6) angeschlossen ist.

16. Türsteuereinheit nach einem oder mehreren der vorhergehenden Ansprüche, bei der als Antriebsmotor (6) ein Gleichstrommotor eingesetzt ist.
